# EUROPEAN PATENT APPLICATION

(11) **EP 2 172 691 A1**
(43) Date of publication of application: **07.04.2010**
(21) Application number: 08017490.7
(22) Date of filing: 06.10.2008
(51) Int. Cl.: F21S 8/00, F21V 29/00, B23Q 17/24, F21W 131/403, F21Y 101/02

(54) **Illuminating device for tools**

(71) Applicant: Avex-SG Technology Inc., Taichung (TW); Leaps & Bounds Technology Co., Ltd., Hsinchu County 30264 (TW); Chern, Shyh Tah, Taichung City 402 (TW)
(72) Inventor: CHEN, Kimble J, Taichung City 403 (TW); CHERN, Shyh Tah, Taichung City 402 (TW); LU, Shao-Yu, Jhubei City Hsinchu County 30264 (TW); KUO, Chi-Wen, Jhubei City Hsinchu County 30264 (TW); CHANG, Sung-Chi, Jhubei City Hsinchu County 30264 (TW); HSU, Jui-Wei, Jhubei City Hsinchu County 30264 (TW); CHUANG, Yu-Ku, Jhubei City Hsinchu County 30264 (TW)
(74) Representative: Strehl Schübel-Hopf & Partner

(57) **Abstract**

A machining tool 10 is installed with an illuminating device 21 that uses a single LED prepared using a multi chip single module technique to provide high-power light. This prolongs the lifetime of the illuminating device 21 and has the advantages of power-saving and low temperature. The light thus produced does not have UV and IR components. In addition to no radiation injury to human bodies, the invention also avoids overlapped shadows in the case of multiple LED sources. Such a design of the cold and single light source can effectively avoid bad influences on the precision of objects 31 being processed.

## Description

### BACKGROUND OF THE INVENTION

### Field of Invention

The invention relates to a device for tools and, in particular, to an illuminating device for tools.

### Related Art

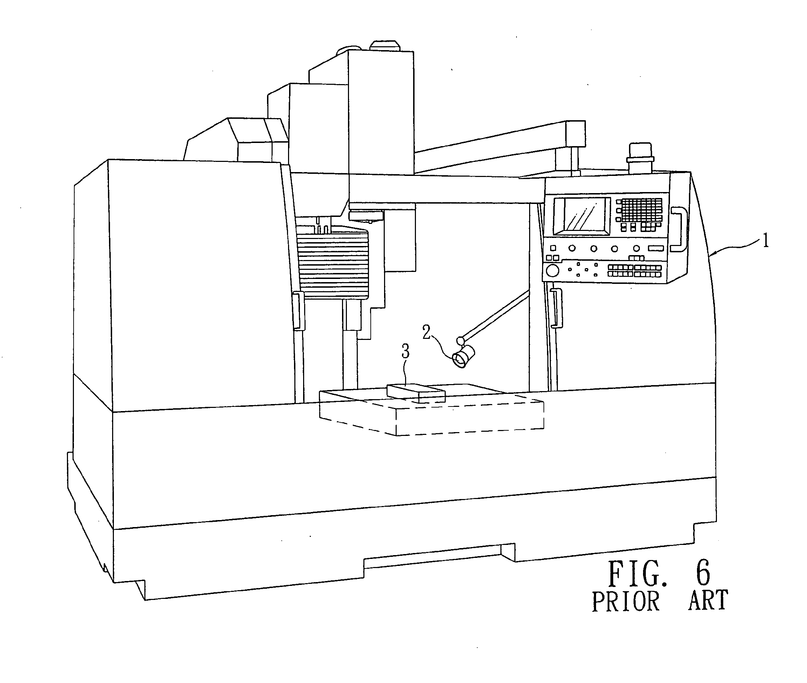

As shown in FIG. 6, a usual tool **1** (e.g., CNC lathe or some machining tool) often includes a halogen light bulb **2** to illuminate an object **3** during the machining process. Its operator can readily observe how the process is going. Even though the halogen light bulb **2** is cheap, such an illuminating means has the following disadvantages:
1. The conventional halogen light bulb consumes too much electrical power. Each one consumes about 50W power on the average. The cost in electricity after a long time of usage will not be cost-effective.
2. The lifetime of the conventional halogen light bulb is short and about 2000 hours on the average. That means it bums out and needs to be replaced after 3 to 5 months.
3. When illuminating, a conventional halogen light bulb produces a lot of heat, resulting in a high temperature on its surface. The operator has the risk of carelessly being burned when he or she puts the object in position or replaces blades.
4. The conventional halogen light bulb uses AC power. The glaring phenomenon occurs when the power becomes too large. The flashing effect of he halogen light bulb is obvious. Therefore, the operator's eyes feel tired very easily.
5. The light emitted by the conventional halogen light bulb contains strong ultraviolet (UV) and infrared (IR) components. If the operator is exposed to a working environment having such much radiation for a long time, his or her skin may be burned, even so seriously to get cancer. Moreover, the UV light greatly increases the possibility for the operator to have cataract. This is particularly apparent in workers who work near the lamps.

The halogen light bulb used by a usual machining tool has a relatively short distance to the object being processed in order to enhance the illumination effect. In addition to its high temperature, the halogen also produces high radiation heat due to its strong UV and IR components. Therefore, if the halogen light bulb shines on the object at a short distance for a long time, the material of the object may be altered due to the high radiation heat. This will result in thermal stress that changes the desired precision on the object being processed.

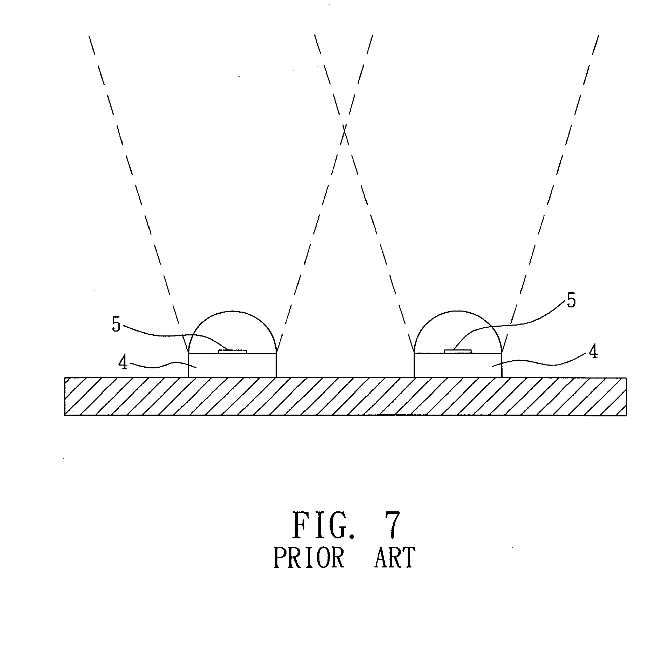

Although the light-emitting diode (LED) has the advantages of power saving and long lifetime, its brightness is generally insufficient for illumination in machining. As shown in FIG. 7, the packaging process of LED lamps is to dispose a light-emitting object 5 on a chip 4, followed by packaging them together. To improve the current situation, one can at best combine several LED lamps together to enhance the illumination. However, when several LED lamps emit light simultaneously, the light-emitting directions of the light-emitting objects 5 in the LED lamps are inconsistent. They will thus interfere and produce shadows. This is also unsuitable for illumination, particularly in precision machining.

The invention is proposed to solve the above-mentioned issues.

### SUMMARY OF THE INVENTION

An objective of the invention is to provide an illuminating device for tools. It provides sufficient and homogeneous light at a better efficiency. It also eliminates the optical interference phenomenon.

Another objective of the invention is to provide an illuminating device for tools that has reduced power consumption and thus a longer lifetime.

Yet another objective of the invention is to provide an illuminating device for tools that has a lower temperature while working to ensure the worker's safety.

A fourth objective of the invention is to provide an illuminating device for tools that does not emit UV or IR radiation to harm human bodies.

A fifth objective of the invention is to provide an illuminating device for tools that has a lower radiation heat because it is a cold light source. This can effectively prevent the radiation heat from affecting the precision of object being processed.

A sixth objective of the invention is to provide an illuminating device for tools that effectively confines light beams from the LED lamp to avoid halos.

To achieve the above-mentioned objectives, the invention discloses an illuminating device for a machining tool. The disclosed illuminating device uses a high-power and single-source LED made using the multi chip single module packaging technique. The illuminating device thus has longer lifetime, smaller power consumption, and lower temperature. Moreover, the emitted light does not contain UV and IR components. This design provides a cold and single light source, which can effectively prevent undesirable effects on the precision of the object being processed.

### BRIEF DESCRIPTION OF THE DRAWINGS

The invention will become more fully understood from the detailed description given herein below illustration only, and thus is not limitative of the present invention, and wherein:
FIG. 1 is a schematic view showing the structure of the invention;
FIG. 2 is a schematic exploded view of the disclosed illuminating device;
FIG. 3 is a schematic view showing the optical paths of the disclosed lens with and without a microlens structure;
FIG. 4 is a table comparing efficiencies of various kinds of lamps;
FIG. 5 is a table comparing the illumination of the disclosed LED lamp and a conventional halogen light bulb;
FIG. 6 is a schematic view showing the structure of a conventional tool using the halogen light bulb; and
FIG. 7 is a schematic view of using multiple LED lamps for illumination.

### DETAILED DESCRIPTION OF THE INVENTION

The present invention will be apparent from the following detailed description, which proceeds with reference to the accompanying drawings, wherein the same references relate to the same elements.

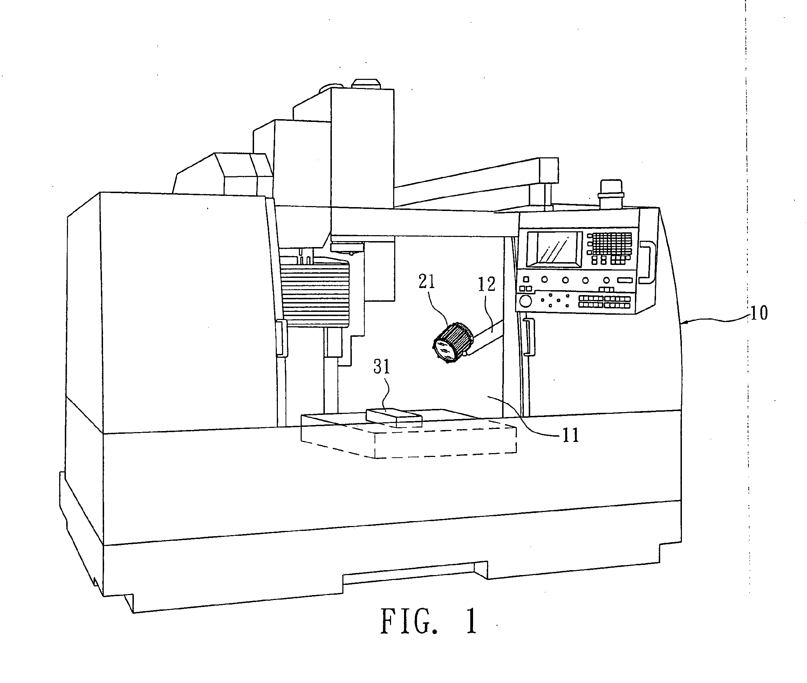

Please refer to FIG. 1. The illuminating device for tools according to the invention has a machining area **11** in a tool **10.** An object **31** to be processed is disposed in the machining area **11** to go through a machining process. An illuminating device **21** uses the LED as its light source for illumination. It is pivotally connected to one arm **12** in the machining area **11**, so that the illuminating device **21** can modify its angle to change the light-emitting direction thereof. The light emitted by the illuminating device **21** can thus directly hit the object **31.**

The light-emitting principle of the LED is to produce photons by combining the electrons and holes in a semiconductor. Unlike the usual halogen light bulb that produces a lot of heat while working and unlike the fluorescent light bulb that requires a high voltage to excite electrons, the LED works at a voltage of **24** V and room temperature just like normal electronic devices.

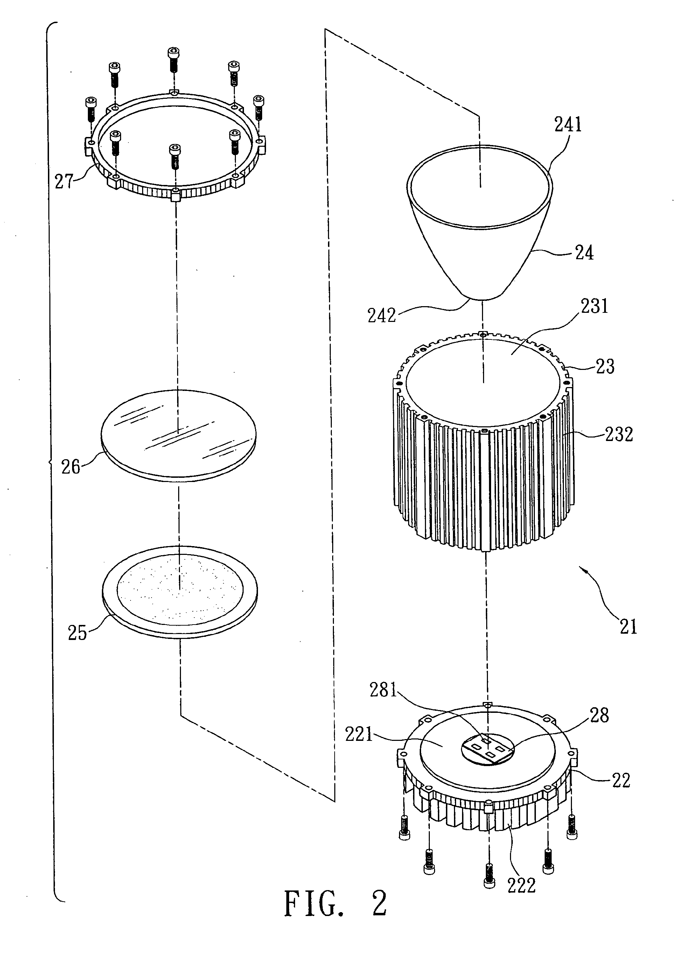

Please refer to FIG. 2. The illuminating device **21** includes a base **22**, an outer shell **23,** a reflective mask **24,** a lens **25**, a protective lens **26**, and a fixing ring **27.**

One end of the base **22** is formed with an installation surface **221** for the installation of an LED module **28**. The other end of the base **22** protrudes outward with a plurality of heat-dissipating fins **222.**

The outer shell **23** has a cylindrical shape with an accommodating space formed therein. Several heat-conductive fins **232** are disposed along a ring around the outer shell **23.** Both ends of the outer shell **23** are connected with the environment, with one end connected to the installation surface **221** of the base **22**. Therefore, the LED module **28** can be accommodated in the accommodating space **231** of the outer shell **23.**

The reflective mask **24** has a long conic shape that has a large-diameter end **241** and a small-diameter end **242**. The reflective mask **24** is coaxially installed in the accommodating space **231** in the outer shell **23**. The reflective mask **24** urges against the installations surface **221** of the base **22** with its small-diameter end **242**. The LED module **28** is disposed at the opening of the small-diameter end **242** of the reflective mask **24**. Therefore, when the LED module **28** functions to produce light, the reflective mask **24** can deflect and converge the initially divergent light. The light emitted by the LED module **28** can thus travel in the same direction.

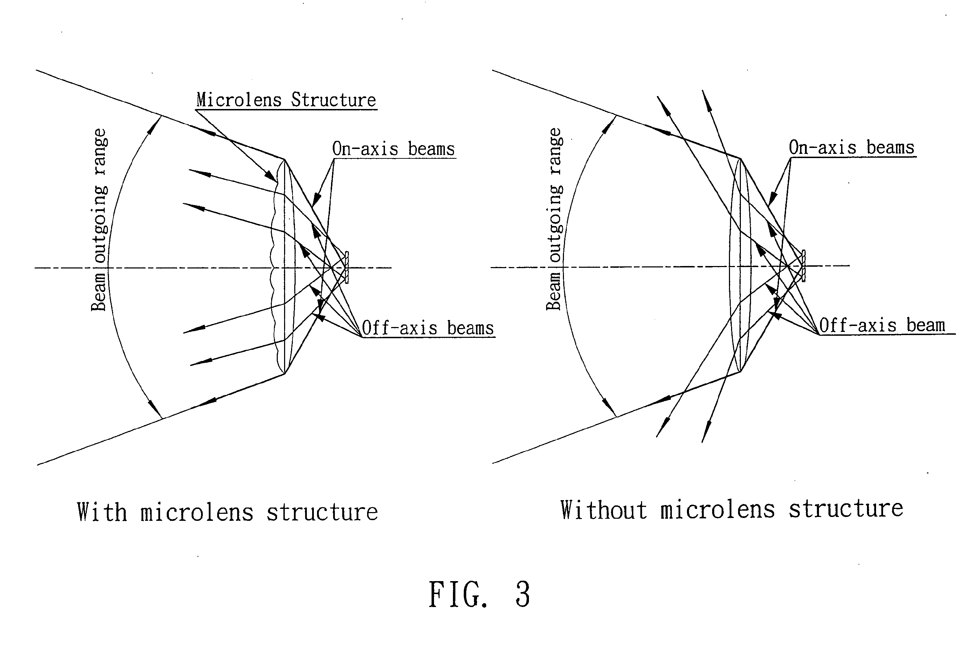

The lens **25** and the protective lens **26** constitute a lens set. They are installed in sequence on the large-diameter end **241** of the reflective mask **24**. As shown in FIG. 3, the lens **25** in the invention has a refractive surface with a positive curvature made using the microlens structure. The light passing through the lens **25** is converged. As shown in the drawing, the lens **25** with the microlens structure has the ability to converge divergent light within a limited region. The lens without the microlens structure will result in halos as the divergent light expands.

After the light emitted by the LED module **28** is collected and converged by the reflective mask **24** and the lens **25**, respectively, the beam is focused homogeneously on the object being processed. The fixing ring **27** is used to connect to the other end of the base **22** opposite to the outer shell **23**. It fixes the protective lens **26**, the lens **25,** and the reflective mask **24** in the accommodating space **231** of the outer shell **23.**

The disclosed LED module **28** has an LED lamp made using the multi chip single module packaging technique. The LED lamp is disposed on an aluminium substrate. Moreover, the LED lamp is formed with a plurality of light-emitting objects **281.** When each of the light-emitting objects **281** on the LED lamp is activated by an electrical current, light is produced for the single high-power LED lamp. Since the light-emitting objects **281** are simultaneously disposed in a single LED lamp, the volume of the LED module **28** is greatly reduced. Furthermore, this is a single light source because the produced light points to a single direction, rendering sufficient and homogeneous light. It effectively avoids shadows due to interference. The emitted light is gentle, continuous, smooth, and close to the natural light. Therefore, the invention provides good illumination effects.

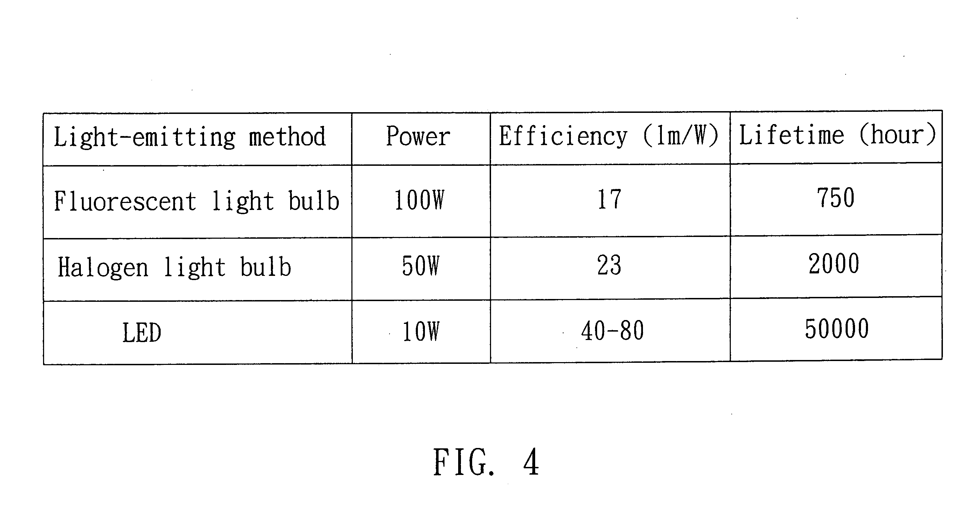

As shown in FIG. 4, the disclosed illuminating device using the LED module has lower power consumption, better illumination efficiency, and longer lifetime than the conventional halogen light bulb or fluorescent light bulb.

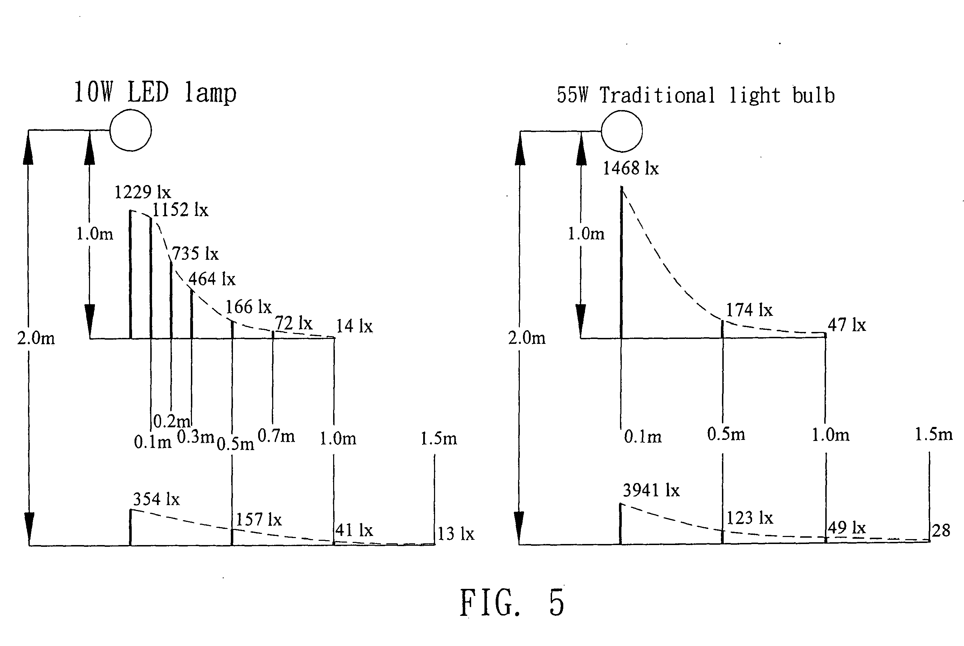

As illustrated in FIG. 5, the disclosed illuminating device **21** using the LED module **28** achieves the high illumination as the conventional high-power halogen light bulb at a lower power. Moreover, it has the advantages of uniform illumination.

The light produced by the disclosed LED module **28** has high illumination. As the lens **25** has a microlens structure that can effectively converge and focus the light to the object in the machining area, sufficient illumination can be provided for the operator, avoiding the difficulty in machining because of insufficient light or halos. The quality and precision of machining can thus be improved.

It should be emphasised that the LED used herein is a high power LED to provide sufficient light. It has gentle, smooth, and continuous illumination. Moreover, it is close to the natural light. Therefore, it is an ideal light source. The colour temperature of such an LED can be as high as 5000 K and thus has better colour quality.

Using the LED as the light source for the object in a machining tool has the following advantages:
1. The disclosed illuminating device uses the LED as its light source. Therefore, it has higher power, lower electrical power consumption, and better light-emitting efficiency. This effectively saves the electricity cost. Moreover, the light emitted by the LED has a fixed orientation, rendering better illuminating effects.
2. The invention employs the multi chip single module packaging technique to dispose several light-emitting objects on a single aluminium substrate simultaneously. In addition to greatly reducing the volume of the LED module, the light-emitting objects produce light in the same direction, amplifying the illumination. Such an illumination is also so uniform that no shadows are produced due to interference.
3. The LED used herein has longer lifetime, about 50000 hours on the average.
4. When the LED of the invention is turned on for illumination, its surface is never so hot to burn the operator's hand. Therefore, even if the worker carelessly touches the LED while disposing the object to be processed or replacing the blades, he or she would not be burned. The safety of the operators is thus enhanced.
5. The invention uses the LED as its light source. Since the light produced by the LED does not have UV or IR components, it is harmless to human bodies. The LED uses a low-voltage constant current. There are no such problems as glaring and flashing. It can illuminate a concentrated area with higher brightness and uniformity. Therefore, it has a better visual effect. The operator's eyes do not get tired even after watching for a long time. Its colour temperature can achieve 5000 K or more. Consequently, it has better quality in colours.
6. The light produced by the LED used in the invention does not contain UV or IR component. Its radiation heat is lower because it is a cold light source. Therefore, the invention can effectively prevent material deterioration due to high-temperature radiation or worse precision in the object due to thermal stress.
7. The lens used in the disclosed illuminating device has a refractive surface with positive curvature manufactured using the microlens structure. Therefore, light passing through it can be effectively converged to avoid the production of halos.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An illuminating device installed in a machining tool **(10)** comprising an LED lamp prepared using the multi chip single module technique and disposed on an aluminium substrate as a high-power light source for illumination, the light produced by the illuminating device **(21)** directly hitting the object **(31)** to be processed.

2. The illuminating device of claim 1, comprising a base **(22)**, an outer shell **(23)**, a reflective mask **(24)**, a lens set, and a fixing ring **(27)**, wherein:
one end of the base **(22)** is formed with an installation surface **(221)** for the installation of an LED module **(28);**
the other end of the base **(22)** has a plurality of protruding heat-dissipating fins **(222);**
an accommodating space **(231)** is formed in the outer shell **(23);**
the outer shell **(23)** is connected to the installation surface **(221)** of the base **(22)** using its one end;
the reflective mask **(24)** has a large-diameter end **(241)** and a small-diameter end **(242)** and is coaxially installed in the accommodating space **(231)** in the outer shell **(23);**
the reflective mask **(24)** urges against the installation surface **(221)** of the base **(22)** using its small-diameter end **(242);**
the LED module **(28)** is accommodated in an opening of the small-diameter end **(242)** of the reflective mask **(24);**
the lens set is installed at the edge of the large-diameter end **(241)** of the reflective mask **(24);** and
the fixing ring **(27)** is connected to the end of the base **(22)** opposite to the outer shell **(23),** so that the lens set and the reflective mask **(24)** are held by the fixing ring **(27)** and accommodated in the accommodating space **(231)** of the outer shell **(23).**

3. The illuminating device of claim 2 wherein the lens set has a protective lens **(26)** and a lens **(25).**

4. The illuminating device of claim 3 wherein the lens **(25)** has a reflective surface with a positive curvature manufactured using the microlens structure technique.

5. The illuminating device of claim 2 wherein the surrounding of the outer shell **(23)** has a plurality of heat-conductive fins **(232)** disposed in a ring.

## Amended claims

### Amended claims in accordance with Rule 137(2) EPC.

**1.** An illuminating device installed in a machining tool (**10**) comprising
an LED lamp of rimlti-chip single-module type disposed on an aluminium substrate as a high-power light source for illumination, and
a lens (**25**) with microlens structure, having a reflective surface with a positive curvature,
wherein the illuminating device (**21**) is adapted to produce light such that it passes through the lens and directly hits the object (**31**) to be processed.

**2.** The illuminating device of claim 1, comprising a base (**22**), an outer shell (**23**), a reflective mask (**24**), a lens set including the lens (**25**), and a fixing ring (**27**), wherein:
one end of the base (**22**) is formed with an installation surface (**221**) for the installation of an LED module (**28**);
the other end of the base (**22**) has a plurality of protruding heat-dissipating fins (**222**);
an accommodating space (**231**) is formed in the outer shell (**23**);
the outer shell (**23**) is connected to the installation surface (**221**) of the base (**22**) using its one end;
the reflective mask (**24**) has a large-diameter end (**241**) and a small-diameter end (**242**) and is coaxially installed in the accommodating space (**231**) in the outer shell (**23**);
the reflective mask (**24**) urges against the installation surface (**221**) of the base (**22**) using its small-diameter end (**242**);
the LED module (**28**) is accommodated in an opening of the small-diameter end (**242**) of the reflective mask (**24**);
the lens set is installed at the edge of the large-diameter end (**241**) of the reflective mask (**24**); and
the fixing ring (**27**) is connected to the end of the base (**22**) opposite to the outer shell (**23**), so that the lens set and the reflective mask (**24**) are held by the fixing ring (**27**) and accommodated in the accommodating space (**231**) of the outer shell (**23**).

**3.** The illuminating device of claim 2 wherein the lens set further includes a protective lens (**26**).

**4.** The illuminating device of claim 2 wherein the surrounding of the outer shell (**23**) has a plurality of heat-conductive fins (**232**) disposed in a ring.
